(19) Europäisches Patentamt
European Patent Office
Office européen des brevets

(11) **EP 2 440 400 B1**

(12) **EUROPEAN PATENT SPECIFICATION**

(45) Date of publication and mention
of the grant of the patent:
**12.08.2015 Bulletin 2015/33**

(21) Application number: **10812450.4**

(22) Date of filing: **08.06.2010**

(51) Int Cl.:
**B32B 3/26** *(2006.01)* **C09D 5/18** *(2006.01)*

(86) International application number:
**PCT/US2010/037794**

(87) International publication number:
**WO 2011/025569 (03.03.2011 Gazette 2011/09)**

(54) **A COATING COMPOSITION FOR THERMAL PROTECTION ON SUBSTRATES, PROCESSES FOR MANUFACTURING, AND METHODS OF APPLYING SAME**

BESCHICHTUNGSZUSAMMENSETZUNG ZUM WÄRMESCHUTZ AUF SUBSTRATEN, VERFAHREN ZU IHRER HERSTELLUNG UND VERFAHREN ZU IHRER AUFBRINGUNG

COMPOSITION DE REVÊTEMENT POUR PROTECTION THERMIQUE SUR DES SUBSTRATS, PROCÉDÉS DE PRODUCTION ET MÉTHODES D'APPLICATION CORRESPONDANTES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **08.06.2009 US 184954 P**

(43) Date of publication of application:
**18.04.2012 Bulletin 2012/16**

(73) Proprietor: **Ocellus, Inc.**
**Livermore, CA 94551 (US)**

(72) Inventors:
• **DROEGE, Michael**
**Livermore, CA 94550 (US)**
• **DOWNEY, Shannon**
**San Lorenzo, CA 94580 (US)**
• **HRUBESH, Lawrence**
**Pleasanton, CA 94566 (US)**

(74) Representative: **Couchman, Jonathan Hugh et al**
**HGF Limited**
**Belgrave Hall**
**Belgrave Street**
**Leeds LS2 8DD (GB)**

(56) References cited:
**US-A1- 2002 061 396      US-A1- 2002 061 396**
**US-A1- 2004 033 882      US-A1- 2007 259 979**
**US-A1- 2008 241 490      US-A1- 2008 241 490**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to a protective coating for use on a substrate, and more particularly to a thermal protective coating, and substrates coated therewith, which coating provides excellent protection from transient extreme-temperature excursions. The term "coating," as used herein, refers to a layer or layers of a material, applied to an underlying substrate, and applied in thicknesses ranging from mils to inches.

### BACKGROUND OF THE INVENTION

Coatings for thermal protection of surfaces are desired for many applications to protect critical surfaces from degradation and to protect internal materials from temperatures exceeding their functional purposes. Some coatings are used to provide at least a short- term protection for personnel and/or equipment to be removed from an area being subjected to abrupt excessive heat, *e.g.,* fires. Other coatings are used for containment of excessive heat as protection for personnel, equipment, and structures, *e.g.*, furnaces, space and military vehicles, *etc.* In space vessels and missiles, coatings are also used to protect surfaces exposed to high thermal flux and aerodynamic shear. Thermal protection coatings are used in many military and defense applications, including in ships, tanks, vehicles, aircraft, shelters and space vehicles.

In the art of coating materials for such applications, the technology has generally focused upon two primary considerations, namely, minimization of the thermal transport through the coating material and strength or robustness of the coating material against external and internal forces. Low thermal transport through a material is generally characterized by its physical property, thermal conductivity. [*See*, *e.g.,* U.S. Patent No. 6,887,563, entitled "Composite Aerogel Material That Contains Fibres," issued May 3, 2005 to Frank, *et al.;* U.S. Patent No. 6,770,584, entitled "Hybrid Aerogel Rigid Ceramic Fiber Insulation And Method Of Producing Same", issued August 3, 2004, to Barney, *et al.,* U.S. Patent Appl. Publ. No. 20070259979, entitled "Organic Aerogels Reinforced With Inorganic Aerogel Fillers," published November 8, 2007, to Lee]. Typically, low thermal conductivity in materials is correlated with low density, whereas strength is correlated with high density.

One skilled in the art of such design and coatings would historically seek to optimize a coating based on balancing these two apparently non-complimentary properties. The initial considerations regarding such design tradeoffs focus on the composition of materials for the coating, such that each of its constituents adds a specific property to the composite coating. Adjustments would then be made to the formulation of the composition to optimize its overall performance. The choice of the components is generally determined by known or published property data and experience.

For transient, extreme-temperature excursion conditions, such as encountered by space vessels, missiles, coatings are also used to protect surfaces exposed to high thermal flux and aerodynamic shear, *etc.,* this tradeoff in design considerations typically renders the coatings unsatisfactory for their intended purpose. Thus, a need remains in the art for coatings that can withstand transient, extreme-temperature excursion conditions.

### SUMMARY OF THE INVENTION

The present invention relates to a protective coating for use on a substrate, and more particularly to a thermal protective coating, which provides an exceptionally large reduction of the heat flow rate during transient extreme-temperature excursion conditions.

In general, in one aspect, the invention features a composition including a mixture of a solvent, wherein the solvent is organic solvent or water; a binder, wherein the binder is selected from the group consisting of silicates, aluminates, zirconates, lanthanates, phosphates and combinations thereof or an RTV silicone; a multiplicity of particles, wherein the particles are selected from the group consisting of ceramic hollow spheres, hollow glass microspheres, alumina hollow particles, zirconia particles, titania particles, and combinations thereof; a multiplicity of fibers, wherein the fibers comprise a material selected from the group consisting of ceramic materials, zirconia, titania, silicon carbide, silicon oxide carbide, zirconia oxycarbide, carbon fibers, and combinations thereof; and a nanofoam, wherein the nanofoam is selected from the group consisting of silica nanofoams, alumina nanofoams, mixed metal oxide nanofoams, organic nanofoams, carbon nanofoams, micro-porous solid nanofoams, nano-porous solid nanofoams, and combinations thereof. The composition is operable as a thermal protective coating under transient, extreme-temperature excursion conditions. The composition may be applied to a surface of an object by spraying, screening, trowelling, slot die coating, cast coating, extrusion or a combination thereof to form said thermal protective coating.

In general, in another aspect, the invention features a process to make a composition that includes mixing a solvent, wherein the solvent is organic solvent or water; a binder, wherein the binder is selected from the group consisting of silicates, aluminates, zirconates, lanthanates, phosphates and combinations thereof or an RTV silicone; a multiplicity of particles, wherein the particles are selected from the group consisting of ceramic hollow spheres, hollow glass microspheres, alumina hollow particles, zirconia particles, titania particles, and combinations thereof; a multiplicity of fibers, wherein the fibers comprise a material selected from the group consisting of ceramic materials, zirconia, titania, silicon carbide, silicon oxide carbide, zirconia oxycarbide, carbon fibers, and combinations thereof; and a nanofoam, wherein the nanofoam is selected from the group consisting of silica nanofoams, alumina nanofoams, mixed metal oxide nanofoams, organic nanofoams, carbon nanofoams, micro-porous solid nanofoams, nano-porous solid nanofoams, and combinations thereof. The process further includes forming the composition from the mixture. The composition is operable as a thermal protective coating under transient, extreme-temperature excursion conditions.

Implementations of the invention can include one or more of the features listed above, as well as the following features:

The coating may have a thermal diffusivity between about $1x\ 10^{-4}\ cm^2/sec$ and about $1\ cm^2/sec$.

The composition may be further operable as an external thermal protective coating.

The composition may be further operable as an internal thermal protective coating.

The composition may be further operable to protect vehicles and components during hypersonic flight.

The composition may be further operable for coating pipes, vessels, walls, and surfaces needing thermal protection under transient, extreme temperature excursion conditions.

The composition may include at most about 90 wt% solvent.

The composition may include between about 5 wt% binder and about 80 wt% binder.

The binder may be a silicate, an aluminate, a zirconate, a RTV silicone, or a combination thereof.

The multiplicity of particles may include hollow particles. The composition may include at most about 80 wt% hollow particles.

The hollow particles may be ceramic hollow spheres, hollow glass microspheres, alumina hollow particles, or a combination thereof.

The multiplicity of particles may include solid particles. The composition may include at most about 80 wt% of solid particles.

The solid particles may be zirconia particles, titania particles, or a combination thereof.

The composition may include at most about 90 wt% fibers.

The fibers may include ceramic fibers. The ceramic fibers may include a material that is silica, alumina, or silica-alumina.

The composition may include between about 0.1 wt% and about 80 wt% nanofoam.

The nanofoam may be an aerogel.

The aerogel may include resorcinol-formaldehyde.

The nanofoam may be an xerogel.

In general, in another aspect, the invention features a method that includes selecting a composition as described above. The process further includes applying the composition to a surface of an object to form a thermal protective coating. The process further includes subjecting the object to transient, extreme-temperature excursion conditions, wherein the thermal protective coating protects the object against the transient, extreme-temperature excursion conditions.

Implementations of the invention can include one or more of the features listed above, as well as the following features:

The thermal protective coating may have a thermal diffusivity between about $1x\ 10^{-4}\ cm2/sec$ and about $1\ cm2/sec$.

The thermal protective coating may protect the object in a manner that is (i) protection from degradation of the surface, (ii) protection of internal materials from temperatures exceeding their functional purposes, or (iii) a combinations thereof.

The thermal protective coating may include an external thermal protective coating.

The thermal protective coating may include an internal insulation coating.

The object may be a vehicle or a component. The step of subjecting the object to transient, extreme-temperature excursion conditions may include subjecting the object to hypersonic flight.

The object may be a pipe, a vessel, a wall, or a surface needing thermal protection under transient, extreme temperature excursion conditions.

The composition may be applied to the surface by a process that is spraying, screening, trowelling, slot die coating, cast coating, extrusion, or a combination thereof.

The method may further include selecting a different composition as described above and applying the second composition to a surface of the thermal protective coating to form a second thermal protective coating.

The method may further include applying the composition to a surface of the first protective coating to form a second thermal protective coating.

The foregoing has outlined rather broadly the features and technical advantages of the invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other structures for carrying out the same purposes of the invention.

**BRIEF DESCRIPTION OF THE DRAWINGS**

For a more complete understanding of the present invention, and the advantages thereof, reference is now made to the following descriptions taken in conjunction with the accompanying drawings, in which:

**FIGURE 1** shows an image of an embodiment of the invention in which carbon steel has been coated with a coating.
**FIGURE 2** is an SEM image of the coating of **FIGURE 1**.
**FIGURE 3** is a plot showing the effect of reducing the thermal diffusivity of a typical 2.54 mm (0.1 inch) thick coating when the surface temperature is held at 1800°C
**FIGURE 4** is an image of a test article to evaluate the thermal performance and stability of an alumina nanofoam coating constituent after 1648.9 °C (3000 °F) arc-jet exposure.
**FIGURE 5A is** the image of **FIGURE 4** which indicates more detailed SEMs shown in **FIGURES 5B-5C** are SEM images of the hot surface and interior, respectively, of the invention after 1648.9 °C (3000 °F) arc-jet exposure.
**FIGURE 6A** is an image of an embodiment of the invention before a thermal shock performance test. **FIGURE 6B** is an image of the same embodiment of the invention after the thermal shock performance test.
**FIGURE 7** is a graph that shows the change in temperature (at the surface of the coating and the substrate) of the embodiment shown in **FIGURES 6A-6B** during the thermal shock performance test.
**FIGURE 8** is an image of an embodiment of the invention during a thermal shock performance test.

**DETAILED DESCRIPTION**

The coating formulation of the present invention is based on the discovery that for transient, high thermal exposures (*i.e.,* transient, extreme-temperature excursion conditions), the best thermal insulation performance of a composition is not solely related to its thermal conductivity and density, but rather to the thermal diffusivity of the composition. Thermal diffusivity contains an additional physical parameter (specific heat capacity at constant pressure) that Applicant has discovered should be significantly considered when selecting the constituent materials for the composite.
The thermal diffusivity of the bulk composition depends upon:

- The specific properties of each constituent of the bulk composition;
- The constituent's relative proportion within the bulk composition;
- The porosity (fraction of pores) within the bulk composition; and
- The connectivity of the constituents within the bulk composition.

An example of the effect of internal structure on the thermal diffusivity is illustrated in graphite, where the thermal diffusivity in the direction of the platelets is 3 orders of magnitude greater than in the direction that is perpendicular to the platelets.
Thus, each composition can have an independent value of thermal diffusion.
The significance of thermal diffusivity for designing short-term (*i.e.,* transient), extreme-temperature excursions is reflected in its definition: thermal diffusivity is the rate of heat transfer through a material. This is different than thermal conductivity, which is related to a material's resistance to heat, not its rate of heat flow. Thus, for a transient case (*i.e.,* abrupt temperature changes) Applicant has discovered that thermal protection performance can be improved by minimizing the heat transfer rate by reducing/minimizing the thermal diffusivity.
Reducing/minimizing thermal diffusivity is a significant deviation for coating designs. This is because the basic instincts when developing an insulation coating is to design a material that has poor thermal transport properties, *i.e.,* low thermal conductivity and low density. However, the ratio of these two terms tends to cancel the effect of each taken separately. Hence, for those applications when an insulation material is exposed to transient high-thermal heating (seconds, minutes, hours), the design must be performed contrary to these basic instincts and focus upon the thermal diffusivity of the composition, which combines conductivity, density, and a third property, the specific heat capacity.
For an insulating material subjected to a transient, extreme temperature excursion conditions on one side of a surface, the cold-side temperature response (*i.e.,* the temperature conditions on the other side of the surface) to the hot-side temperature excursion may be described by the following equation (1):

$$T_{CS} = T_{HS} [1 - \text{erf}(z)] + T_I [\text{erf}(z)] \qquad (1)$$

where:

erf ( ) = the mathematical error-function of the argument in parentheses;
Tcs = cold-side temperature of the insulation (time varying);
$T_{HS}$ = hot-side temperature profile of the insulation (time varying);
$T_I$ = initial temperature of the insulation (a constant); and

$$z = [x / (2 \cdot \alpha^{1/2} \cdot t^{1/2})] \qquad (2)$$

where for equation (2):

x = insulation thickness;
t = time; and

$$\alpha = \text{thermal diffusivity} = k / (C_p \cdot \rho) \qquad (3)$$

Where for equation (3):

k = thermal conductivity;
Cp = specific heat capacity at constant pressure; and
p = density.

[H. Wayland, "Differential Equations Applied in Science and Engineering," D. Van Nostrand Company, Inc. Princeton, New Jersey (1957), pp.238-241].

For a constant insulation thickness and during the time of the heat exposure on the hot side, equation (1) shows that the term, z, should be _maximized_ (i.e., increased) to limit the peak of the cold-side temperature excursion in time, i.e., to optimize the insulation performance. As reflected in equation (2), maximizing z, for a constant insulation thickness (x) and a fixed time (t), reveals that thermal diffusivity ($\alpha$) should be _minimized_ (i.e., reduced).

As reflected in equation (3), thermal diffusivity ($\alpha$) is directly proportional to thermal conductivity (k) and inversely proportional to specific heat capacity (Cp) and density ($\rho$). Thus minimization/reduction of thermal diffusivity occurs when specific heat capacity and density are maximized/increased, while minimizing/reducing thermal conductivity.

It is counterintuitive to have a high-density material with a low conductivity (and even more counterintuitive to use one as an insulating coating material). However, these features (a high-density material with a low conductivity) can be obtained by using a composite of several materials. This can be achieved by mixing together materials that have the desired set of characteristics and physical properties, in appropriate relative concentrations to form a novel composite coating layer.

Furthermore, because the density is relatively high, this generally will enhance the strength and robustness of the coating material against external and internal forces. This is contrary to the tradeoff that exists in the prior art (between minimization of the thermal transport through the coating material and strength or robustness of the coating material against external and internal forces).

For instance, a candidate coating composition might include: fibers for strength, microballoons for porosity, nanofoams (e.g., aerogels, xerogels, and related nanoporous solids) for lightweight and thermal performance, and inorganics for refractory performance. Such a material could be combined in a final form that minimized/reduces the thermal diffusivity, leaving the thickness (x) as the controlling parameter for designing the performance to fit the intended application.

The design criteria for the composition must also take into account the effects that the transient, extreme-temperature excursion conditions have on the composition and its components. For example, polymer foam materials generally have low thermal conductivity, but they decompose and are unusable for temperatures > 400°C. Also, it is known that the thermal conductivity (solid contribution) for most solids decreases with increased temperature, but for gases the relation is opposite. So, for lower temperature applications, a low density (high porosity) may be more appropriate, whereas for higher temperature=applications, a high density (low porosity) may be utilized.

The present invention may be used to coat metals, particularly alloys of steel, aluminum, copper, and titanium, and non-metallic surfaces, particularly carbon-carbon composites, glass, ceramics and polymers (epoxy, etc.) and polymer composites (epoxy-carbon fiber, epoxy-glass fiber, epoxy-quartz fiber, etc.), thereby providing protection against transient, extreme-temperature excursion conditions up to approximately 3000°C.

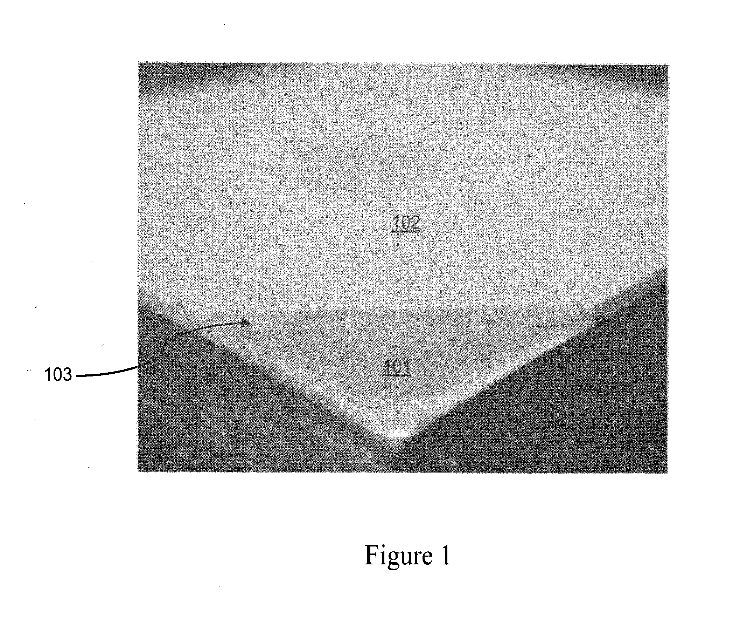

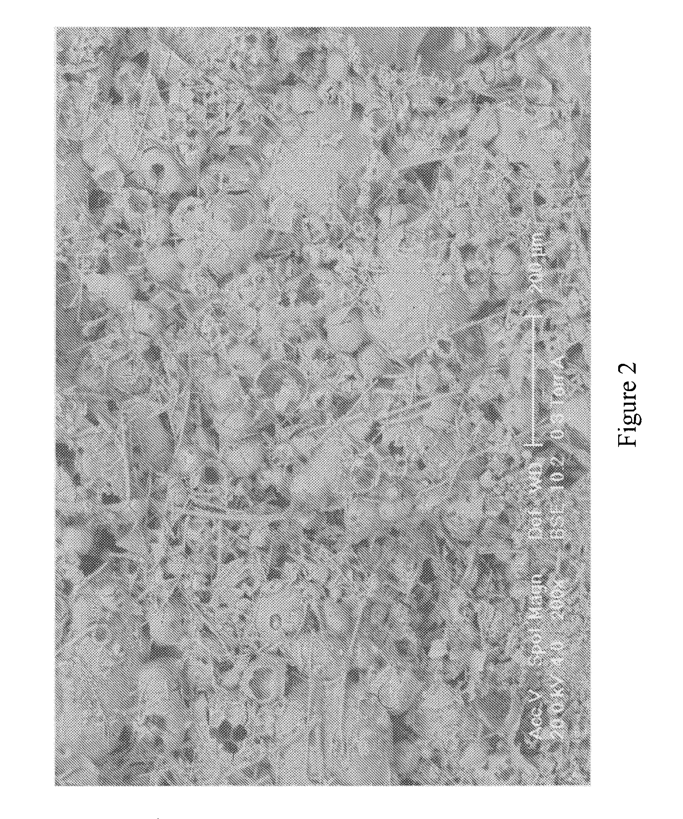

**FIGURE 1** shows an image of an embodiment of the invention in which a coating **101** has been applied to a carbon steel substrate **102**. The coating **101** has been cutout at interface **103** to show the uncoated carbon steel substrate **102**. **FIGURE 2** is an SEM image of the coating **101** of **FIGURE 1**.

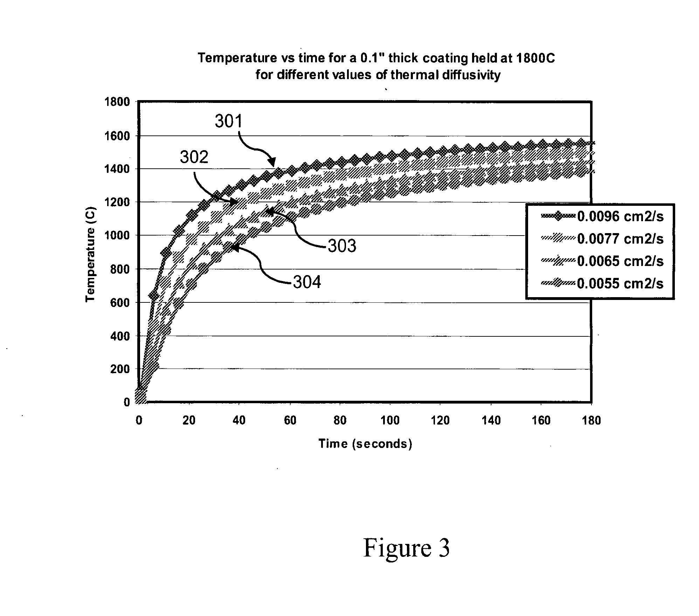

The insulating performance of a given thickness of the coating depends on its thermal diffusivity and on the time that its surface is exposed to the high temperature. For short times (*e.g.,* less than 20 seconds), the temperature difference between the front and back surface of the coating can range from 600°C to 1100°C, depending on the thermal diffusivity of the coating. The range of temperature difference is smaller for longer times, but the range also depends on the thermal diffusivity of the coating, and the largest differences are obtained for smaller values of the coating diffusivity. This effect is shown in **FIGURE 3** for a 2.54 mm (0.1 inches) thick coating, exposed to a constant temperature of 1800°C. Curves **301-304** are for thermal diffusivities of 0.0096 $cm^2$/sec, 0.0077 $cm^2$/sec, 0.0065 $cm^2$/sec, and 0.0055 $cm^2$/sec, respectively. The temperature difference between the front and back side of the coating that has the lowest thermal diffusivity

(curve **304**) ranges from 1150°C at 20 seconds of exposure, to 420°C at 3 minutes of exposure.

Thus for a fixed value of thermal conductivity (k), minimizing the density results in an increase in thermal diffusivity and a less effective insulating system for transient high temperature excursions.

An aspect of the present invention is to provide a thermal protective coating that improves the thermal stability of substrate materials at temperatures substantially higher than the substrate material's melting point or thermal dissociation point. This protection permits the substrate material's exposure to higher thermal conditions than would normally be permitted by the uncoated substrate, thereby extending the substrate material's useful range of thermal exposures.

A related aspect of the present invention is to enhance the coating's thermal protection insulation performance by varying the parameters that minimize the thermal diffusivity of the bulk material composite. This is accomplished by using an appropriate mixture of types and geometries of constitutive materials that minimize the thermal conductivity while also maximizing the product of density and heat capacity.

The thermal protective coating in the present invention has especially low thermal diffusivity; therefore, the heat that is not reflected from the surface is conducted into the bulk coating very slowly. This aspect of the present invention provides fire protection for diverse coated substrates including steel and aluminum catalytic converters, exhaust systems, aircraft passenger compartments and interiors, furnaces, office buildings and homes, and the like.

Another aspect of the present invention is that it is able to increase performance temperatures for all kinds of metals, and non-metals, including, but not limited to, iron, steel, cast iron, titanium, and aluminum and alloys thereof, carbon composites, polymer composites, plastics, and the likes.

Furthermore, the present invention allows increased abrasion and corrosion resistance on the surface of abrasion prone metallic and non-metallic structures, including planes and other aerospace applications, boats, and automobiles.

Another aspect of the present invention is to provide a thermal protective coating that does not produce toxic fumes when heated. A thermal protective coating according the present invention can be 100% inorganic, and therefore produces no toxic fumes. On the other hand, many flame-retardant products contain large quantities of organic materials, which produce smoke under flame and can be toxic in enclosed spaces.

Another aspect of the present invention is to provide a thermal protective coating that is inexpensive and safe to formulate. The formulation is an aqueous mixture and contains a minimum of organic material, which is further reduced after curing.

Another aspect of the invention is to provide a thermal protection coating that does not depend on ablation of the coating to obtain optimal performance.

Another aspect of this invention is to provide a simple and relatively inexpensive means to apply the coating to the substrate surface. This is accomplished by designing the formulation in mixtures that can be sprayed, or thickened mixtures that can be applied by physical deposition methods such as spraying, screening, trowelling, slot die coating, cast coating, extrusion, *etc.*

Another aspect of the present invention is to provide a thermal protective coating that does not significantly increase the weight of the coated substrate.

These and other objects of the present invention will become readily apparent upon further review of the following specification.

This present invention is a composite coating (such as a sprayable thermal barrier) for transient, high temperature protection of metals (aluminum, titanium, steels), ceramics, ceramic composites, plastics, and polymer composites. The coatings are designed to be applied either as an external barrier coating or as an internal insulation coating, such as to protect vehicles and components during hypersonic flight. This lightweight coating is produced using inexpensive raw materials and can be applied efficiently using commercial application techniques. This feature provides an efficient manufacturing route to large-scale production, such as for thermally protected projectiles and hypersonic structures, at reduced of acquisition cost.

Generally, the thermal requirements for hypersonic flight include: the thermal materials must tolerate aerothermal loading (melt temperatures greater than 815.6 °C (1500 °F) (and more preferably greater than 1093.3 °C (2000 °F)) and thermal shock of around 537.8 °C/sec (1000 °F/sec) (or greater)); high G acceleration (G loads greater than 5,000 G (and more preferably greater than 20,000 G)); flight in all-weather conditions. It is also advantageous if materials are easily applied, adhere to wide ranges of substrates, and have a low cost.

More specifically, this thermal barrier coating is a novel composite consisting of discrete, mechanically robust structural components combined with thermally insulating components. The discrete components are selected to provide the composite with desirable physical and thermal properties, particularly, high strength and low thermal diffusivity. The use of discrete components allows formulation of a composite mixture that can be fluidized in a carrier solvent and applied using routine, industrially proven surface coating methods, such as spraying, screening, trowelling, slot die coating, cast coating, extrusion, *etc.*. The coatings can be prepared using commercially available components and the application methods use commercially available equipment. Routes to manufacturing scale-up (even automated manufacturing) are likewise readily known to those of ordinary skill in this technology.

In embodiments of the present invention, it relates to a thermal protective coating for transient, extreme-temperature excursion conditions that includes between about 5 wt% and about 80 wt% binder (and more preferably between about 5 wt% and about 60 wt% binder), up to about 80 wt% particles (and more preferably up to about 40 wt% particle), up to about 90 wt% fibers (hollow fibers, solid fibers, *etc.)* (and more preferably up to about 70 wt% fibers), and between about 0.1 wt% and about 80 wt% of nanofoam (and more preferably between about 0.1 wt% and about 40 wt% of nanofoam).

In a coating solution according to the present invention, a wet admixture of the thermal protective coating includes up to about 90 wt% water or other solvent.

As used herein, all percentages (%) are expressed as weight percent (wt%), unless otherwise indicated.

Also, as used herein, the terms "wet admixture" refers to relative percentages of the composition of the thermal protective coating in solution and "dry admixture" refers to the relative percentages of the composition of the dry thermal protective coating mixture before the addition of water or other solvent (*i.e.,* the dry admixture percentages are those present without taking water or other solvent into account). Wet admixture refers to the admixture in solution (with water or other solvent). "Wet weight percentage" is the weight in a wet admixture, and "dry weight percentage" is the weight in a dry admixture without regard to the wet weight percentages.

Binders useful in the present invention include inorganic binders such as silicates, aluminates, zirconates, lanthanates, phosphates and combinations thereof, as well as select thermally robust inorganic-organic binders (such as RTV silicones). Such binders are available from KiON Defense Industries, Inc., Huntingdon Valley, Pennsylvania (KDT HTA 1500™ ambient-cure coating resin), Aremco, Valley Cottage, New York (Cerama-Bind™ 643-1 high temperature inorganic binder), *etc.*

Particles useful in the present invention include hollow particles, solid particles, and combinations thereof. Hollow particles include ceramic hollow spheres (such as Extendospheres™ hollow spheres from Sphere One, Inc., Chattanooga, Tennessee), hollow glass microspheres (such as from 3M), and alumina hollow particles, and the like.

Fibers useful in the present invention include ceramic materials (*i.e.,* ceramic fibers), zirconia, titania, silicon carbide, silicon oxide carbide, zirconia oxycarbide, and combinations thereof, as well as carbon fibers. Many such fibers are readily available as commercial products

Nanofoams useful in the present invention include silica nanofoams, alumina nanofoams, mixed metal oxide nanofoams, (*e.g.*, silica-alumina, titania-silica, titania-silica, *etc.*), organic nanofoams, carbon nanofoams, micro-porous solid nanofoams, nano-porous solid nanofoams, and combinations thereof. In some embodiments, the nanofoams are aerogels, such as silica aerogels, alumina aerogels, mixed metal oxide aerogels, (*e.g.*, silica-alumina, titania-silica, titania-silica, *etc.),* organic aerogels, carbon aerogels, micro-porous solid aerogels, nano-porous solid aerogels, and combinations thereof (and with other types of nanofoams). In some embodiments, the aerogel is alumina (air dried).

In some embodiments, the nanofoams are xerogels, such as silica xerogels, alumina xerogels, mixed metal oxide xerogels, (*e.g.*, silica-alumina, titania-silica, titania-silica, *etc.),* organic xerogels, carbon xerogels, micro-porous solid xerogels, nano-porous solid xerogels, and combinations thereof (and with other types of nanofoams).

Solvents useful in the present invention include organic solvents and water.

The present invention can be applied to a substrate surface. The substrate surface may be a metallic substrate (such as iron, aluminum alloys, copper, titanium alloys, steel, stainless steel, cast iron, and the like), or it may be a non-metallic substrate (such as carbon-carbon composite, glass, ceramic, polymer or polymer composite). The coating is typically applied wet, and allowed to dry. Drying includes air drying at room temperature and drying at elevated temperatures between about 40°C and about 200°C. Curing, if needed, can be accomplished by further heating at elevated temperatures between 40°C and about 1000°C. The substrates may be internal surfaces, external surfaces, and, in general, any other substrate surfaces that may be subjected to transient, extreme- temperature excursion conditions.

Initially, a metal surface should be cleaned of all dirt, loose material, surfactants, oils, and the like. The surface of a metallic substrate may be grit blasted or sanded, as necessary, to remove oxidation and other tough contaminants. Cleaner substrate surfaces result in increased adhesion of the protective coating. Various cleaning and related surface preparation methods are well-known and available to prepare the metal for coating.

The thermal protective coating of the present invention is prepared by placing the liquid ingredients in a clean, relatively dry mixing container. While mixing, the remaining ingredients are added slowly to the mixture to prevent the powders from clumping and sticking to the side of the mixing container. The mixture is then mixed using well-known methods such as an overhead paddle-type stirrer or even hand mixing.

The coating can be applied to the substrate as soon as possible after it is mixed and the surface is prepared or certain formulations can be prepared and stored for a period of time (day, weeks, months) before applying.. The coating admixture can be applied using a spray gun or by other suitable methods for uniformly applying coatings to surfaces. The thickness of the coating can range between about 0.254 mm (0.01 inches) and about 152.4 mm (6 inches). (A "thin coating" is a coating less than about 1.27 mm (0.05 inches) thick; a "thick coating" is a coating more than about 2.54 mm (0.1 inches) thick). The coating can also be applied in layers creating a multi-layer coating. Each such layer may have a unique composition from the other layers such that when combined the multilayer coating possesses properties not found in each individual layer. Examples include a multi-layer where the outer most layer is hard and dense and protects the coating from impact and other environmental effects while the inner layers are formulated to provide thermal protection or a multi-layer coating that is designed to accommodate the thermal expansion or contraction of the substrate.

Controlling the coverage density of the deposit is desirable for an even coating that adheres to the substrate and is without substantial cracking. In some embodiments of the present invention, it is beneficial for there to be some insubstantial cracking of the coating, such as microcracking.

For transient, extreme-temperature excursion conditions, it is desirable for the coatings to provide thermal diffusivity values between about $1x\ 10^{-4}$ $cm^2$/sec and about 1 $cm^2$/sec.

Others features of the novel thermal protecting coatings include:

a. Coatings have the ability to adhere to a particular type of substrate. Examples of a particular type of substrate include aluminum, titanium, steel, quartz, and composites, such as carbon or glass fiber-epoxy.
b. Coatings have thermal insulation and stability greater than 815.6 °C (1500 °F).
c. Coatings are robust under launch set-back conditions (greater than 5000 G).
d. Coatings can be applied by various methods (spraying, casting, extruding) which can be done by automated, cost-effective manufacturing.
e. Coatings can be non-oxidizing or ablating (which results in less potential to obscure sensors).
f. Coatings balance high temperature insulation and strength (which results in better and longer thermal protection).
g. Coatings have low dielectric constants/loss (which results in less communications interference).
h. Coatings are efficient to manufacture (which results in lower costs).

## Example 1

This example illustrates a preparation of a composition of the present invention.

The composition was prepared by mixing 83 wt % acetone (solvent), 7 wt% KDT HTA 1500™ ambient-cure coating resin (KiON Defense Industries, Inc., Huntingdon Valley, Pennsylvania) (binder), 3.3 wt% Extendospheres™ hollow spheres (Sphere One, Inc., Chattanooga, Tennessee) (particles); 3.3 wt% saffil fiber (fiber); 13.3 wt% alumina aerogel.

The liquid ingredients were placed in a clean, relatively dry mixing container. While mixing, the remaining ingredients were added slowly to the mixture so as to prevent the dry ingredients from clumping and sticking to the side of the mixing container. All components were then mixed thoroughly to form the composition.

## Example 2

The composition of Example 1 was applied by spraying or trowelling onto an aluminum substrate in a layer about 1.27 mm (0.05 inches) thick. After drying and curing, a continuous thermal protective coating with strong adhesion to the aluminum substrate was obtained.

## Example 3

This example illustrates a preparation of another composition of the present invention.

The composition was prepared by mixing 31 wt% distilled water (solvent), 10.8 wt% alumina nanofoam, 31 wt% silicate binder (Cerama-Bind™ 643-1 high temperature inorganic binder, Aremco Products, Inc., Valley Cottage, New York) (binder), 18.1 wt% Extendospheres™ hollow spheres (Sphere One, Inc., Chattanooga, Tennessee) (particles); 9.0 wt% ceramic fiber (Nextel, 3M) (fiber); The liquid ingredients were placed in a clean, relatively dry mixing container. While mixing, the remaining ingredients were added slowly to the mixture so as to prevent the dry ingredients from clumping and sticking to the side of the mixing container. All components were then mixed thoroughly to form the composition.

## Example 4

A steel substrate (1935.5 mm$^2$ (3 inches square)) coated with 2.54 mm (0.1 inch) of the coating composition described in Example 3 was exposed to arc-jet testing to determine performance. The coating was exposed to a temperature of about 1204.4 °C (2200°F) for three minutes. The coating reduced the temperature at the metal surface by 593.3 °C (1100°F).

## Example 5

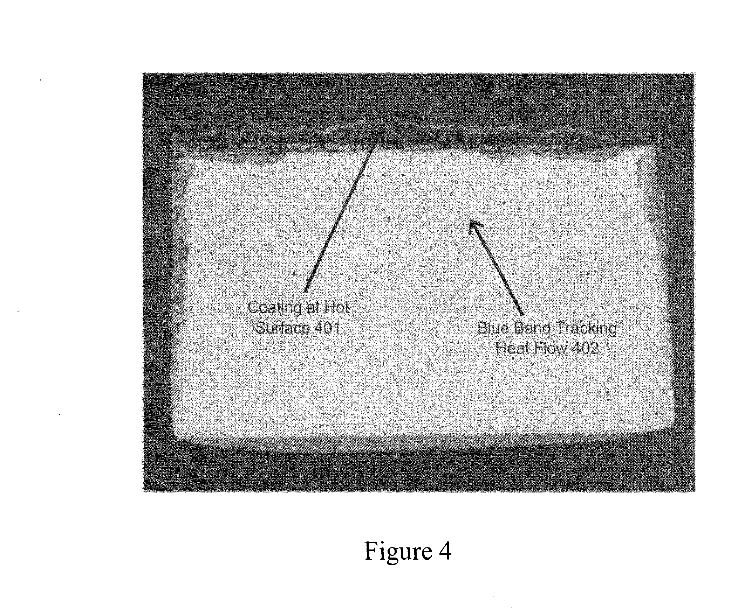

In a test to determine the thermal performance and stability of an alumina nanofoam coating constituent, a composite consisting of alumina nanofoam and a rigid inorganic fiber shape was evaluated in an arc-jet test similar to that described in Example 4 except that this test article was exposed to a temperature of about 1648.9 °C (3000°F). The interior of the test article was subsequently examined, and, as shown in **FIGURE 4**, a blue band **402** had appeared in the alumina aerogel/alumina-silica fiber composite material. A thin inorganic coating used to provide an efficient thermal coupling between the test article and the arc jet plasma was applied to the test article at the hot surface **401** and is also shown in **FIGURE 4**.

This blue band **402** provided a visual track of heating progression through the insulation.

More detailed analysis of color change by SEM evaluation showed that at the hottest location during the test (immediately adjacent to the hot surface **401**; exposure at about 1648.9 °C (3000 °F)), the alumina nanofoam component transitioned to new structure. The fine, nanoscale structure of the original alumina nanofoam transformed to a coarser, fibrous-like structure within the fiber structure.

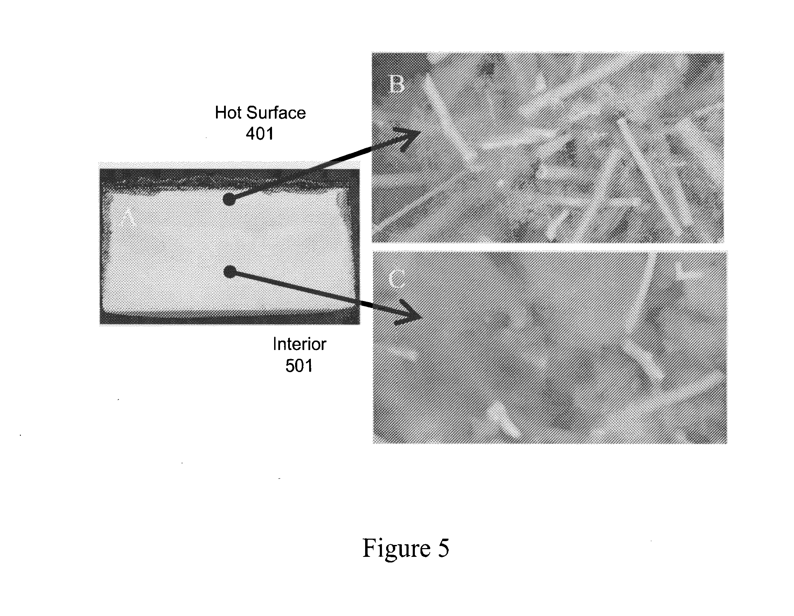

**FIGURE 5A** is the same SEM image as shown in **FIGURE 4**, which indicates two areas (hot surface **401** and interior **501**) of the specimen that more detail SEM images were taken. **FIGURE 5B** is an SEM image of area at hot surface **401** of the specimen. **FIGURE 5C** is an SEM image of the interior **501** of the specimen.

This structural transformation did not appear to adversely impact the structural integrity of the composite or its physical properties. Indeed, Applicant believes this structural transformation likely provided an additional mechanism of thermal resistance due to an assumed endothermic phase change that was triggered at high temperatures.

## Example 6

This example illustrates a preparation of another composition of the present invention.

The composition was prepared by mixing 23 wt% distilled water (solvent), 7.1 wt% alumina nanofoam, 45.8 wt% silicate binder (Cerama-Bind™ 643-1 high temperature inorganic binder, Aremco Products, Inc., Valley Cottage, New York) (binder), 14.2 wt% Extendospheres™ hollow spheres (Sphere One, Inc., Chattanooga, Tennessee) (particles); 9.1 wt% alumina fiber (Ultra B97, Rath) (fiber), 0.75 wt% Extendospheres™ XOL-200 hollow spheres (Sphere One, Inc., Chattanooga, Tennessee) (particles); The liquid ingredients were placed in a clean, relatively dry mixing container. While mixing, the remaining ingredients were added slowly to the mixture so as to prevent the dry ingredients from clumping and sticking to the side of the mixing container. All components were then mixed thoroughly to form the composition.

## Example 7

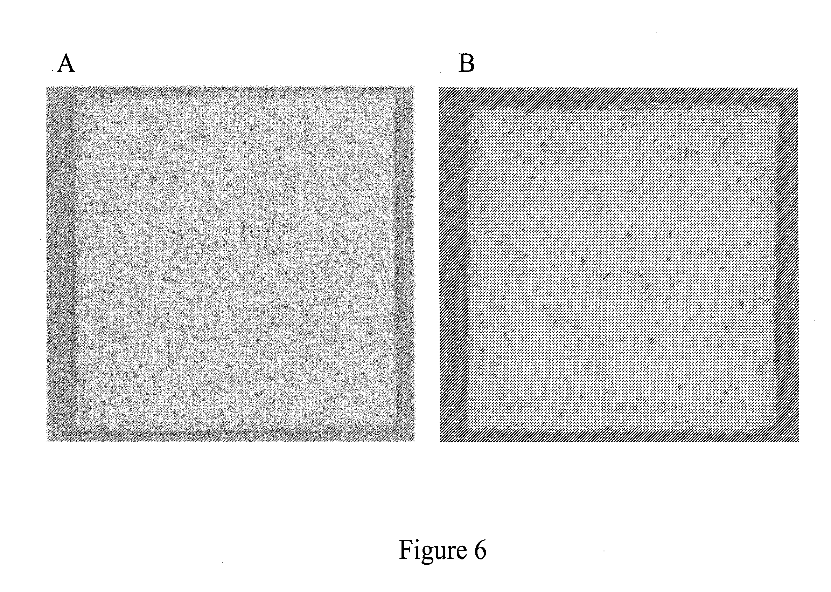

This example shows the thermal shock performance of an embodiment of the present invention. This sample was made by coating a titanium substrate with 0.1 inch of the composition described in Example 6. The sample was then subjected to a thermal shock performance test that included laser heating (60W/sec) of the sample for 10 sec. **FIGURE 6A** is an image of the sample before the thermal shock performance test. **FIGURE 6B** is an image of the same sample after the thermal shock performance test.

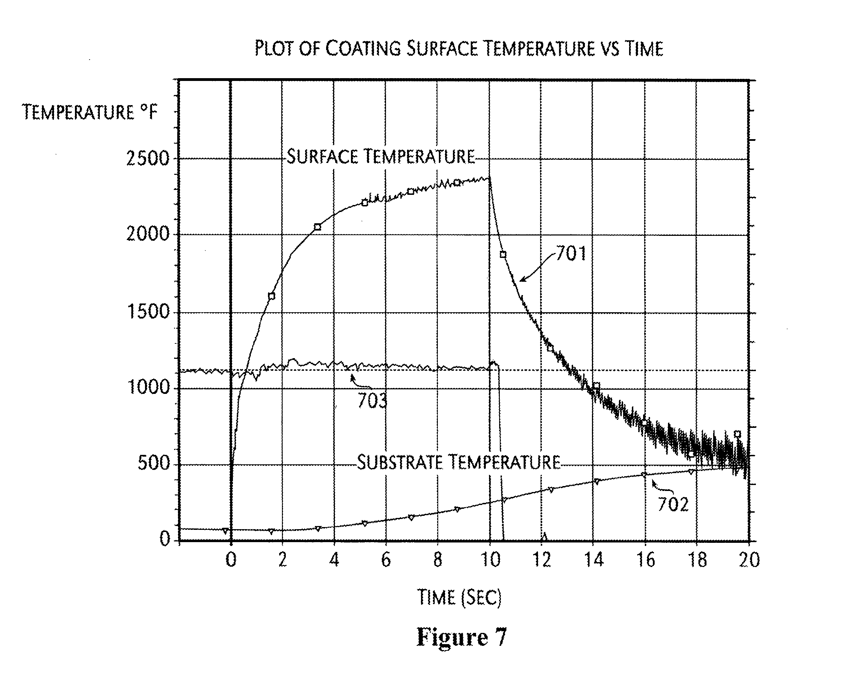

**FIGURE 7** is a graph that plots the coating surface temperature versus time. Curve **703** reflects the 60W/sec laser heating that was subjected to the sample for 10 second period. Curve **701** shows the surface temperature of the coating, which rose dramatically when subjected to the laser heating and reached a temperature of about 1315.6 °C (2400 °F) after 10 seconds. Curve **702** shows that substrate temperature rose significantly less during that same period, reaching only a temperature of around 148.9 °C (300 °F) after 10 seconds. After the laser heating was terminated, the temperature of the surface then decreased for the next 10 seconds to a temperature of 260°C (500 °F) while the temperature of the substrate rose to that temperature.

## Example 8

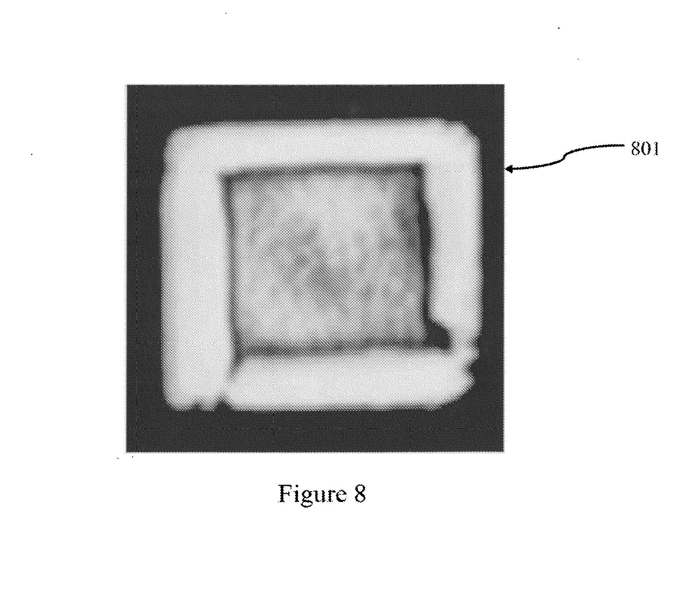

**FIGURE 8** is an image of another embodiment of the invention during an alternative thermal shock performance test. In this test, the coated test coupon **801** was subjected to 30W/sec of laser heating for 10 seconds.

A performance summary of certain of the above testing and of other testing results of the thermal coating testing is reflected below in Table A.

**Table A**

| Performance Parameter | Test Method | Result |
|---|---|---|
| Thermal Properties, Stability, and Shock | Thermal Conductivity | 50 to 200 mW/mK at RT 100 to 200 mW/mK at 426.7 °C (800 °F) |
| | Torch Heating | Stable to 1093.3°C (2000 °F) |
| | Radiant Heating | Stable to 1093.3°C (2000 °F) (30 W/cm$^2$) |
| | Arc-Jet Heating | Stable to 1260°C (2300 °F) (30 W/cm$^2$) |
| | LHMEL | Stable to 1093.3°C (2000 °F) $\Delta T$ at 2 sec (60 W/cm$^2$) |
| Launch Set-Back | Light gas gun | > 5000 Gs |
| Hot Vibroacoustic | Stable at 760°C (1400 °F) and 160 dB | |
| Hot Dielectric Properties | RF waveguide 815°C (1500 °F) | Low Dielectric Constant/Loss |

The examples provided herein are to more fully illustrate some of the embodiments of the present invention. It should be appreciated by those of skill in the art that the techniques disclosed in the examples represent techniques discovered by the inventors to function well in the practice of the invention, and thus can be considered to constitute exemplary modes for its practice.

It will be understood that certain of the above-described structures, functions, and operations of the above-described embodiments are not necessary to practice the present invention and are included in the description simply for completeness of an exemplary embodiment or embodiments. In addition, it will be understood that specific structures, functions, and operations set forth in the above-described referenced patents and publications can be practiced in conjunction with the present invention, but they are not essential to its practice.

## Claims

1.   A composition comprising a mixture of:

(a) a solvent, wherein the solvent is organic solvent or water;

(b) a binder, wherein the binder is selected from the group consisting of silicates, aluminates, zirconates, lanthanates, phosphates and combinations thereof or an RTV silicone;

(c) a multiplicity of particles, wherein the particles are selected from the group consisting of ceramic hollow spheres, hollow glass microspheres, alumina hollow particles, zirconia particles, titania particles, and combinations thereof;

(d) a multiplicity of fibers, wherein the fibers comprise a material selected from the group consisting of ceramic materials, zirconia, titania, silicon carbide, silicon oxide carbide, zirconia oxycarbide, carbon fibers, and combinations thereof; and

(e) a nanofoam, wherein the nanofoam is selected from the group consisting of silica nanofoams, alumina nanofoams, mixed metal oxide nanofoams, organic nanofoams, carbon nanofoams, micro-porous solid nanofoams, nano-porous solid nanofoams, and combinations thereof,

wherein the composition is operable as a thermal protective coating under transient, extreme-temperature excursion conditions and wherein the composition may be applied to a surface of an object by spraying, screening, trowelling, slot die coating, cast coating, extrusion or a combination thereof to form said thermal protective coating.

2. A method to make a composition comprising

   (a) mixing

   (i) a solvent, wherein the solvent is organic solvent or water;
   (ii) a binder, wherein the binder is selected from the group consisting of silicates, aluminates, zirconates, lanthanates, phosphates and combinations thereof or an RTV silicone;
   (iii) a multiplicity of particles, wherein the particles are selected from the group consisting of ceramic hollow spheres, hollow glass microspheres, alumina hollow particles, zirconia particles, titania particles, and combinations thereof;
   (iv) a multiplicity of fibers, wherein the fibers comprise a material selected from the group consisting of ceramic materials, zirconia, titania, silicon carbide, silicon oxide carbide, zirconia oxycarbide, carbon fibers, and combinations thereof; and
   (v) a nanofoam, wherein the nanofoam is selected from the group consisting of silica nanofoams, alumina nanofoams, mixed metal oxide nanofoams, organic nanofoams, carbon nanofoams, micro-porous solid nanofoams, nano-porous solid nanofoams, and combinations thereof; and

   (b) forming the composition from the mixture, wherein the composition is operable as a thermal protective coating under transient, extreme-temperature excursion conditions.

3. A method comprising:

   (a) selecting a composition of Claim 1;
   (b) applying the composition to a surface of an object to form a thermal protective coating; and
   (c) subjecting the object to transient, extreme-temperature excursion conditions, wherein the thermal protective coating protects the object against the transient, extreme-temperature excursion conditions.

4. The composition of Claim 1, the method to make of Claim 2, or the method of Claim 3, wherein the coating has a thermal diffusivity between about $1x\ 10^{-4}$ $cm^2$/sec and about 1 $cm^2$/sec.

5. The composition of Claim 1 or 4, the method to make of Claim 2 or 4, or the method of Claim 3 or 4, wherein the composition is inorganic provided that the solvent is selected from organic solvents and water.

6. The composition of Claims 1, 4 or 5, the method to makes of Claims 2, 4 or 5, or the method of Claims 3, 4 or 5, wherein the composition is further operable to protect vehicles and components during hypersonic flight.

7. The composition of any of Claims 1 or 4-6, the method to make of any of Claims 2 or 4-6, or the method of any of Claims 3-6, wherein the composition is further operable for coating pipes, vessels, walls, and surfaces needing thermal protection under transient, extreme temperature excursion conditions.

8. The composition of any of Claims 1 or 4-7, the method to make of any of Claims 2 or 4-7, or the method of any of Claims 3-7, which further comprises any one or more of the following features:

   (a) the composition comprises at most about 90 wt% of the solvent;
   (b) the composition comprises between about 5 wt% and about 80 wt% of the binder;
   (c) the composition comprises at most about 80% of the particles;
   (d) the composition comprises at most about 90 wt% of the fibers; and
   (e) the composition comprises between about 0.1 wt% and about 80 wt% of the nanofoam.

9. The composition of any of Claims 1 or 4-8, the method to make of any of Claims 2 or 4-8, or the method of any of Claims 3-8, wherein

   (a) the composition comprises between about 5 wt% binder and about 60 wt% binder;
   (b) the composition comprises at most about 40% of the particles;
   (c) the composition comprises at most about 70 wt% of the fibers; and
   (d) the composition comprises between about 0.1 wt% and about 40 wt% of the nanofoam.

10. The composition of any of Claims 1 or 4-9, the method to make of any of Claims 2 or 4-9, or the method of any of Claims 3-9, wherein

    (a) the fibers comprise ceramic fibers; and/or
    (b) the nanofoam is an aerogel or a xerogel.

11. The composition of Claim 10, the method to make of Claim 10, or the method of Claim 10, wherein

    (a) the ceramic fibers comprise a material selected from the group consisting of silica, alumina, and silica-alumina;
    (b) the nanofoam is the aerogel, and
    (c) the aerogel comprises resorcinol-formaldehyde.

12. The method of any of Claims 3-11, wherein the thermal protective coating protects the object in a manner selected from the group consisting of (i) protection from degradation of the surface, (ii) protection of internal materials from temperatures exceeding their functional purposes, and (iii) combinations thereof.

13. The method of any of Claims 3-12, wherein

    (i) the object is selected from the group consisting of vehicles and components, and
    (ii) subjecting the object to transient, extreme-temperature excursion conditions comprises subjecting the object to hypersonic flight.

14. The method of any of Claims 3-13, wherein the object is selected from the group consisting pipes, vessels, walls, and surfaces needing thermal protection under transient, extreme temperature excursion conditions.

15. The method of any of Claims 3-14, wherein the composition is applied to the surface by a process selected from the group consisting of spraying, screening, trowelling, slot die coating, cast coating, extrusion, and combinations thereof.

**Patentansprüche**

1. Mittel, umfassend eine Mischung aus:

    a) Lösungsmittel, wobei das Lösungsmittel ein organisches Lösungsmittel oder Wasser ist;
    b) Bindemittel, wobei das Bindemittel ausgewählt wird aus der Gruppe bestehend aus Silikaten, Aluminaten, Zirkonaten, Lanthanaten, Phosphaten und Kombinationen davon oder einem RTV-Silikon;
    c) Vielzahl von Partikeln, wobei die Partikel ausgewählt werden aus einer Gruppe, bestehend aus keramischen Hohlkugeln, Mikroglashohlkugeln, Aluminiumoxid-Hohlpartikeln, Zirkoniumdioxidpartikeln, Titandioxidpartikeln und Kombinationen davon;
    d) Vielzahl von Fasern, wobei die Fasern ein Material umfassen, das ausgewählt ist aus einer Gruppe, bestehend aus keramischen Materialien, Zirkoniumoxid, Titandioxid, Siliciumkarbid, Siliciumoxidkarbid, Zirkoniumdioxid-oxycarbid, Kohlefasern und Kombinationen davon; und
    e) Nanoschaum, wobei der Nanoschaum ausgewählt wird aus einer Gruppe, bestehend aus Siliciumoxid-Nanoschaum, Aluminiumoxidnanoschaum, gemischten Metalloxidnanoschäumen, organischen Nanoschäumen, Kohlenstoffnanoschäumen, mikroporösen festen Nanoschäumen, nanoporösen festen Nanoschäumen und Kombinationen davon,
    wobei das Mittel als thermische Sicherheitsbeschichtung unter kurzzeitigen Sonderbedingungen mit Extremtemperaturen einsetzbar ist und wobei das Mittel auf eine Oberfläche oder ein Objekt durch Sprühen, Streichen, Walzen, Schlitzdüsenbeschichtung, Gussbeschichtung, Extrusion oder einer Kombination davon aufgetragen werden kann, um die thermische Schutzbeschichtung herzustellen.

2. Methode zur Herstellung eines Mittels, umfassend

    a) Vermischen von

        i. Lösungsmittel, wobei das Lösungsmittel ein organisches Lösungsmittel oder Wasser ist;
        ii. Bindemittel, wobei das Bindemittel ausgewählt wird aus der Gruppe, bestehend aus Silikaten, Aluminaten, Zirkonaten, Lanthanaten, Phosphaten und Kombinationen davon oder einem RTV-Silikon;

iii. Vielzahl von Partikeln, wobei die Partikel ausgewählt werden aus einer Gruppe, bestehend aus keramischen Hohlkugeln, Mikroglashohlkugeln, Aluminiumoxid-Hohlpartikeln, Zirkoniumdioxidpartikeln, Titandioxidpartikeln und Kombinationen davon;

iv. Vielzahl von Fasern, wobei die Fasern ein Material umfassen, das ausgewählt ist aus einer Gruppe bestehend aus keramischen Materialien, Zirkoniumdioxid, Titandioxid, Siliciumkarbid, Siliciumoxidkarbid, Zirkoniumdioxid-oxycarbid, Kohlefasern und Kombinationen davon; und

v. Nanoschaum, wobei der Nanoschaum ausgewählt wird aus einer Gruppe bestehend aus Siliciumdioxid-Nanoschaum, Aluminiumoxidnanoschaum, gemischten Metalloxidnanoschäumen, organischen Nanoschäumen, Kohlenstoffnanoschäumen, mikroporösen festen Nanoschäumen, nanoporösen festen Nanoschäumen und Kombinationen davon; und

b) Herstellung des Mittels aus der Mischung, wobei das Mittel als thermische Sicherheitsbeschichtung unter kurzzeitigen Sonderbedingungen mit Extremtemperaturen einsetzbar ist.

3. Verfahren, umfassend:

a) Auswählen eines Mittels gemäß Anspruch 1;

b) Auftragen des Mittels auf eine Oberfläche eines Objekts zur Bildung einer thermischen Schutzbeschichtung; und

c) Objekt wird kurzzeitigen Sonderbedingungen mit Extremtemperaturen ausgesetzt, wobei die thermische Schutzbeschichtung das Objekt vor den kurzzeitigen Sonderbedingungen mit Extremtemperaturen schützt.

4. Mittel gemäß Anspruch 1, Herstellungsverfahren gemäß Anspruch 2 oder Verfahren gemäß Anspruch 3, wobei die Beschichtung eine Temperaturleitfähigkeit zwischen rund $1\times10^{-4}$ cm$^2$/s und rund 1 cm$^2$/s beträgt

5. Mittel gemäß Anspruch 1 oder 4, Herstellungsverfahren gemäß Anspruch 2 oder 4 oder Verfahren gemäß Anspruch 3 oder 4, wobei das Mittel anorganisch ist, vorausgesetzt, dass das Lösungsmittel aus organischen Lösungsmitteln und Wasser ausgewählt ist.

6. Mittel gemäß Anspruch 1, 4 oder 5, Herstellungsverfahren gemäß Anspruch 2, 4 oder 5 oder Verfahren gemäß Anspruch 3, 4 oder 5, wobei das Mittel ferner einsetzbar ist, um Fahrzeuge und Bauteile beim Hyperschallflug zu schützen.

7. Mittel gemäß Anspruch 1 oder 4-6, Herstellungsverfahren gemäß Anspruch 2 oder 4-6 oder Verfahren gemäß Anspruch 3-6, wobei das Mittel ferner einsetzbar ist zur Beschichtung von Rohren, Behältern, Wänden und Oberflächen, die thermischen Schutz unter kurzzeitigen Sonderbedingungen mit Extremtemperaturen benötigen.

8. Mittel gemäß Anspruch 1 oder 4-7, Herstellungsverfahren gemäß Anspruch 2 oder 4-7 oder Verfahren gemäß Anspruch 3-7, das ferner eines oder mehrere beliebige der folgenden Merkmale umfasst:

a) Mittel umfasst maximal rund 90 Gewichtsprozent des Lösungsmittels;

b) Mittel umfasst zwischen rund 5 Gewichtsprozent und rund 80 Gewichtsprozent des Bindemittels;

c) Mittel umfasst maximal rund 80 Gewichtsprozent der Partikeln;

d) Mittel umfasst maximal rund 90 Gewichtsprozent der Fasern; und

e) Mittel umfasst zwischen rund 0,1 Gewichtsprozent und rund 80 Gewichtsprozent des Nanoschaums.

9. Mittel gemäß Anspruch 1 oder 4-8, Herstellungsverfahren gemäß Anspruch 2 oder 4-8 oder Verfahren gemäß Anspruch 3-8, wobei

a) das Mittel zwischen rund 5 Gewichtsprozent und rund 60 Gewichtsprozent des Bindemittels umfasst;

b) das Mittel maximal rund 40 Gewichtsprozent der Partikeln umfasst;

c) das Mittel maximal rund 70 Gewichtsprozent der Fasern umfasst; und

d) das Mittel zwischen rund 0,1 Gewichtsprozent und rund 40 Gewichtsprozent des Nanoschaums umfasst.

10. Mittel gemäß Anspruch 1 oder 4-9, Herstellungsverfahren gemäß Anspruch 2 oder 4-9 oder Verfahren gemäß Anspruch 3-9, wobei

a) die Fasern Keramikfasern umfassen; und/oder

b) der Nanoschaum ein Aerogel oder ein Xerogel ist.

11. Mittel gemäß Anspruch 10, Herstellungsverfahren gemäß Anspruch 10 oder Verfahren gemäß Anspruch 10, wobei

a) die Keramikfasern ein Material umfassen, das ausgewählt wurde aus einer Gruppe, bestehend aus Siliciumoxid, Aluminiumoxid und Siliciumoxid-Aluminiumoxid;

b) der Nanoschaum das Aerogel ist, und

c) das Aerogel Resorcin-Formaldehyd umfasst.

12. Verfahren gemäß einem der Ansprüche 3-11, wobei die thermische Schutzbeschichtung das Objekt in einer Weise schützt, die ausgewählt wurde aus einer Gruppe, bestehend aus (i) Schutz vor Oberflächenabnutzung, (ii) Schutz der Innenmaterialien vor Temperaturen, die deren Gebrauchszwecke überschreiten, und (iii) Kombinationen davon.

13. Verfahren gemäß einem der Ansprüche 3-12, wobei

i. das Objekt ausgewählt wird aus einer Gruppe, bestehend aus Fahrzeugen und Bauteilen, und

ii. das Objekt kurzzeitigen Sonderbedingungen mit Extremtemperaturen ausgesetzt wird, die umfassen, dass das Objekt dem Hyperschallflug ausgesetzt wird.

14. Verfahren gemäß einem der Ansprüche 3-13, wobei das Objekt aus einer Gruppe ausgewählt wird, bestehend aus Rohren, Behältern, Wänden und Oberflächen, die unter kurzzeitigen Sonderbedingungen mit Extremtemperaturen thermischen Schutz benötigen.

15. Verfahren gemäß einem der Ansprüche 3-14, wobei das Mittel mittels eines Vorgangs auf die Oberfläche aufgetragen wird, der ausgewählt wurde aus einer Gruppe, bestehend aus Sprühen, Streichen, Walzen, Schlitzdüsenbeschichtung, Gussbeschichtung, Extrusion oder einer Kombination davon.

**Revendications**

1. Une composition comprenant un mélange composé :

(a) d'un solvant, le solvant étant un solvant organique ou de l'eau ;

(b) d'un liant, le liant appartenant au groupe composé de silicates, aluminates, zirconates, lanthanates, phosphates, ainsi que des combinaisons de ces derniers, ou un silicone RTV ;

(c) d'une multiplicité de particules, lesdites particules étant sélectionnées dans le groupe composé de sphères creuses de céramiques, de microsphères creuses de verre, de particules creuses d'alumine, de particules de zircone, de particules de dioxyde de titane, et de combinaisons de ces dernières ;

(d) d'une multiplicité de fibres, ces fibres comprenant une matière sélectionnée dans un groupe composé de matériaux de céramique, de zircone, de dioxyde de titane, de carbure de silicium, de carbure d'oxyde de silicium, d'oxycarbure de zircone, de fibres de carbone, et de combinaisons de ces derniers ; et

(e) d'une nano-mousse, la nano-mousse étant sélectionnée dans le groupe composé de nano-mousses de silice, de nano-mousses d'alumine, de nano-mousses d'oxyde métallique mixte, de nano-mousses organiques, de nano-mousses de carbone, de nano-mousses solides microporeuses, de nano-mousses solides nano-poreuses, et de combinaisons de ces dernières, la composition étant utilisable comme revêtement de protection thermique dans des conditions comprenant des écarts transitoires de températures extrêmes, et pouvant être appliquée sur la surface d'un objet par pulvérisation, par sérigraphie, à la truelle, par filière droite, par enduction par coulée, par extrusion, ou par une combinaison de ces derniers pour former ledit revêtement de protection thermique.

2. Une méthode de réalisation d'une composition, comprenant

(a) le mélange

(i) d'un solvant, ce solvant étant un solvant organique ou de l'eau ;

(ii) d'un liant, le liant étant sélectionné dans le groupe composé de silicates, aluminates, zirconates, lanthanates, phosphates, ainsi que des combinaisons de ces derniers, ou un silicone RTV ;

(iii) d'une multiplicité de particules, lesdites particules étant sélectionnées dans le groupe composé de sphère creuses de céramique, de microsphères creuses de verre, de particules creuses d'alumine, de particules de zircone, de particules de dioxyde de titane, et de combinaisons de ces dernières ;

(iv) d'une multiplicité de fibres, ces fibres comprenant une matière sélectionnée dans le groupe composé de matériaux de céramique, de zircone, de dioxyde de titane, de carbure de silicium, de carbure d'oxyde de silicium, d'oxycarbure de zircone, de fibres de carbone, et des combinaisons de ces derniers ; et

(v) d'une nano-mousse, la nano-mousse étant sélectionnée dans le groupe composé de nano-mousses de silice, de nano-mousses d'alumine, de nano-mousses d'oxyde métallique mixte, de nano-mousses organiques, de nano-mousses de carbone, de nano-mousses solides microporeuses, de nano-mousses solides nano-poreuses, et de combinaisons de ces dernières ; et

(b) la formation de la composition à partir du mélange, la composition étant utilisable comme revêtement de protection thermique en présence d'écarts transitoires de températures extrêmes.

3. Une méthode comprenant :

(a) la sélection d'une composition selon la revendication 1 ;

(b) l'application de la composition sur une surface d'un objet pour la formation d'un revêtement de protection thermique ; et

(c) la soumission de l'objet à des écarts transitoires de températures extrêmes, le revêtement de protection thermique protégeant l'objet contre les écarts transitoires de températures extrêmes.

4. La composition selon la revendication 1, la méthode pour une réalisation selon la revendication 2, ou la méthode selon la revendication 3, le revêtement présentant une diffusivité thermique comprise entre environ $1 \times 10^{-4}$ cm$^2$/sec et environ 1 cm$^2$/sec.

5. La composition selon la revendication 1 ou 4, la méthode pour une réalisation selon la revendication 2 ou 4, ou la méthode selon la revendication 3 ou 4, la composition étant inorganique à condition que le solvant soit sélectionné parmi des solvants organiques et l'eau.

6. La composition selon les revendications 1, 4 ou 5, la méthode pour des réalisations selon les revendications 2, 4 ou 5, ou la méthode selon les revendications 3, 4 ou 5, la composition étant également utilisable pour la protection de véhicules et composants au cours de vols hypersoniques.

7. La composition selon une quelconque des revendications 1 ou 4-6, la méthode pour des réalisations selon une quelconque des revendications 2 ou 4-6, ou la méthode selon une quelconque des revendications 3-6, la composition étant également utilisable pour le revêtement de tuyaux, réservoirs, parois et surfaces nécessitant une protection thermique en présence d'écarts transitoires de températures extrêmes.

8. La composition selon une quelconque des revendications 1 ou 4-7, la méthode pour des réalisations selon une quelconque des revendications 2 ou 4-7, ou la méthode selon une quelconque des revendications 3-7, comprenant en outre une ou plusieurs des caractéristiques suivantes :

(a) la composition comprend au plus environ 90% en poids du solvant ;

(b) la composition comprend d'environ 5% en poids à environ 80% en poids du liant ;

(c) la composition comprend au plus environ 80% des particules ;

(d) la composition comprend au plus environ 90% en poids des fibres ; et

(e) la composition comprend d'environ 0,1 % en poids à environ 80% en poids de nano-mousse.

9. La composition selon une quelconque des revendications 1 ou 4-8, la méthode pour des réalisations selon une quelconque des revendications 2 ou 4-8, ou la méthode selon une quelconque des revendications 3-8, dans laquelle

(a) la composition comprend entre environ 5% en poids de liant et environ 60% en poids de liant ;

(b) la composition comprend au plus environ 40% des particules ;

(c) la composition comprend au plus environ 70% en poids des fibres ; et

(d) la composition comprend d'environ 0,1 % en poids à environ 40% en poids de nano-mousse.

10. La composition selon une quelconque des revendications 1 ou 4-9, la méthode pour des réalisations selon une quelconque des revendications 2 ou 4-9, ou la méthode selon une quelconque des revendications 3-9, dans laquelle

(a) les fibres comprennent des fibres de céramique ; et/ou
(b) la nano-mousse est un aérogel ou un xérogel.

11. La composition selon la revendication 10, la méthode pour une réalisation selon la revendication 10, ou la méthode selon la revendication 10, dans laquelle

(a) les fibres de céramique comprennent une matière sélectionnée dans le groupe composé de silice, alumine et silice-alumine ;
(b) la nano-mousse est l'aérogel, et
(c) l'aérogel comprend du résorcinol-formaldéhyde.

12. La méthode selon une quelconque des revendications 3-11, dans laquelle le revêtement de protection thermique protège l'objet d'une façon sélectionnée dans le groupe composé de (i) la protection contre la dégradation de la surface, (ii) la protection des matériaux internes contre des températures dépassant leur objectif fonctionnel, et (iii) des combinaisons de ces dernières.

13. La méthode selon une quelconque des revendications 3-12, dans laquelle

(i) l'objet est sélectionné dans le groupe composé de véhicules et composants, et
(ii) la soumission de l'objet à des écarts transitoires de température extrêmes comprend la soumission de ce même objet à un vol hypersonique.

14. La méthode selon une quelconque des revendications 3-13, dans laquelle l'objet est sélectionné dans un groupe composé de tuyaux, réservoirs, parois et surfaces nécessitant une protection thermique en présence d'écarts transitoires de températures extrêmes.

15. La méthode selon une quelconque des revendications 3-14, dans laquelle la composition est appliquée sur la surface par un procédé sélectionné dans le groupe de procédés comprenant la pulvérisation, la sérigraphie, l'application à la truelle, l'application par filière droite, l'enduction par coulée, l'extrusion, et des combinaisons de ces derniers.

Figure 1

Figure 2

Temperature vs time for a 0.1" thick coating held at 1800C
for different values of thermal diffusivity

Figure 3

EP 2 440 400 B1

Figure 4

Hot Surface
401

Interior
501

Figure 5

Figure 6

Figure 7

EP 2 440 400 B1

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6887563 B
- US 6770584 B

- US 20070259979 A

### Non-patent literature cited in the description

- **H. WAYLAND.** Differential Equations Applied in Science and Engineering. D. Van Nostrand Company, Inc, 1957, 238-241